# FASCICULE DE BREVET EUROPEEN

(11) **EP 2 901 069 B1**
(45) Date de publication et mention de la délivrance du brevet: **22.07.2020**
(21) Numéro de dépôt: 13782741.6
(22) Date de dépôt: 24.09.2013
(51) Int. Cl.: B64C 11/38, F16N 21/00, F01D 7/00, F16C 33/66

(54) **BAGUE D'INTERFACE HYDRAULIQUE ET ELECTRIQUE POUR UNE TURBOMACHINE**
HYDRAULISCHER UND ELEKTRISCHER SCHNITTSTELLENRING FÜR EINEN TURBINENMOTOR
HYDRAULIC AND ELECTRICAL INTERFACE RING FOR A TURBINE ENGINE

(30) Priorité: 28.09.2012 FR 1259207
(43) Date de publication de la demande: 05.08.2015
(73) Titulaire: Safran Aircraft Engines, 75015 Paris (FR)
(72) Inventeur: CURLIER, Augustin, F-77550 Moissy-Cramayel cedex (FR); BELMONTE, Olivier, F-77550 Moissy-Cramayel cedex (FR)
(74) Mandataire: Gevers & Orès
(86) Numéro de dépôt international: PCT/FR2013/052227
(87) Numéro de publication internationale: WO 2014/049257

(56) Documents cités:
- EP-A1- 1 306 558
- FR-A1- 2 574 125
- FR-A1- 2 942 615
- JP-A- 2003 042 372
- JP-U- S5 082 421
- US-A- 4 693 672
- US-A1- 2011 113 899

## Description

### DOMAINE TECHNIQUE

La présente invention concerne une bague d'interface hydraulique et électrique pour une turbomachine, qui est particulièrement adaptée mais non exclusivement pour l'alimentation en fluide (tel que de l'huile) d'un actionneur linéaire de turbomachine de type open rotor.

### ETAT DE L'ART

Une turbomachine de type open rotor comprend principalement, selon un axe longitudinal et à l'intérieur d'une nacelle cylindrique, portée par la structure de l'aéronef (comme la partie arrière du fuselage d'un avion), une partie « générateur de gaz » et une partie « propulseur » (seule la partie de nacelle couvrant le générateur de gaz est fixe tandis que les parties de nacelle, dans lesquelles sont logés les carters tournants, sont rotatives). La partie propulseur comporte deux hélices coaxiales et contrarotatives, respectivement amont (avant) et aval (arrière), qui comprennent des carters rotatifs à anneau polygonal et qui sont entraînées, en rotation inverse l'une de l'autre, par exemple, par un mécanisme approprié entraîné par une turbine de puissance située en sortie de la partie générateur de gaz, avec les pales des hélices s'étendant radialement à l'extérieur de la nacelle.

Pour permettre le fonctionnement optimal de la turbomachine selon les différentes phases de vol rencontrées, les pales des hélices contrarotatives peuvent tourner dans les logements radiaux des anneaux. Pour cela, elles sont entraînées en rotation autour de leurs axes de pivot respectifs, par un système d'orientation approprié permettant de faire varier le calage des pales en cours de vol, c'est-à-dire le pas des hélices. Par exemple, les pales peuvent varier selon le système, de + 90° à 30° pour les phases de vol, de + 30° à - 30° pour les phases au sol et d'inversion de poussée, et avoir un retour rapide à 90°, en position drapeau, en cas de dysfonctionnement en vol, pour laquelle les pales sont effacées par rapport à la direction d'avance de l'avion et offrent le moins de traînée possible.

Comme système d'orientation des pales, on connaît celui décrit dans la demande de brevet français de la demanderesse FR 11 58891.

Ce système d'orientation des pales d'une hélice comporte :
- un mécanisme de commande de puissance fluidique à actionneur linéaire centré sur l'axe longitudinal de la turbomachine et solidaire d'un carter fixe supportant l'hélice ;
- un mécanisme de liaison pour transformer la translation de la partie mobile de l'actionneur en une rotation des pales pour en modifier le pas, et comportant, à cet effet, un palier de transfert dont la bague interne est solidaire de la partie mobile de l'actionneur, et un moyen de transmission à bielles entre la bague externe du palier et les pales, et
- un moyen de lubrification dudit palier de transfert.

À mesure que la partie mobile de l'actionneur se déplace, la bague interne du palier de transfert, solidaire de la partie mobile de l'actionneur, suit le déplacement et entraîne la bague externe rotative via le contact des organes de roulement, et tire ou pousse sur les bielles du moyen de transmission, ce qui permet de modifier l'angle de calage des pales qui tournent dans leurs logements.

Le moyen de lubrification assure la lubrification et le refroidissement en continu du palier, quelle que soit la position axiale de l'actionneur.

Une technique permettant une lubrification optimale du palier, développée par la demanderesse, a fait l'objet d'une demande de brevet français FR 12 56140 et consiste à acheminer l'huile de lubrification jusqu'à l'intérieur du palier en passant par l'actionneur.

En particulier, des tiges ou canalisations fixes sont raccordées à une source d'alimentation en lubrifiant pour coopérer de façon coulissante avec la partie mobile de l'actionneur (soit par des passages ménagés dans la partie mobile, soit par l'intérieur des tiges anti-rotation prévues entre les parties mobile et fixe de l'actionneur, soit par une cavité annulaire située entre la partie mobile de l'actionneur et un support de la bague interne du palier) et injecter le lubrifiant provenant des tiges d'acheminement de celui-ci, dans des trous radiaux de la bague interne jusqu'à l'intérieur du palier.

L'actionneur doit être alimenté en huile sous pression ou de puissance pour assurer son fonctionnement, c'est-à-dire pour alimenter en huile haute pression ses chambres et entraîner le coulissement de sa partie mobile sur sa partie fixe, comme décrit dans la demande de brevet français FR 12 56923. La partie fixe de l'actionneur est solidaire d'un carter structural cylindrique fixe par l'intermédiaire d'une virole annulaire, les sources d'alimentation en huile sous pression étant situées à l'avant et à l'intérieur du carter. Or, la partie mobile de l'actionneur, qui est montée autour de la partie fixe et reliée, par le palier, aux pales de l'hélice concernée via un système de tringlerie, se trouve du côté extérieur, arrière, de la virole, par opposition au côté intérieur, avant, de la virole, dans laquelle arrivent les alimentations de puissance en direction de l'actionneur. Se pose par conséquent le problème de transfert d'huile de puissance au travers de la virole de séparation, dans le cas présent, de l'intérieur vers l'extérieur de celle-ci.

On connaît aussi l'utilisation de bagues d'interface permettant de transférer un fluide utilisé par le système d'orientation des pales de turbomachine, voir par exemple US4693672 A ou FR2574125 A1. La présente invention a pour but d'apporter une solution au problème ci-dessus par la conception d'un dispositif de transfert de fluide servant ainsi d'interface en particulier entre une alimentation amont et un organe aval destiné à recevoir du fluide, ce fluide étant par exemple de l'huile de lubrification et/ou de l'huile de puissance.

### EXPOSE DE L'INVENTION

L'invention propose à cet effet une bague d'interface hydraulique et électrique pour une turbomachine, caractérisée en ce qu'elle comporte des conduits de transfert de fluide traversant axialement la bague et dont les extrémités axiales forment des moyens d'emboîtement axial, la bague comportant en outre des moyens de support d'au moins un équipement électrique, et au moins un connecteur de raccordement électrique de l'équipement, ce connecteur étant configuré pour coopérer par emboîtement axial avec un connecteur électrique complémentaire d'une autre pièce.

L'invention est particulièrement avantageuse car elle permet d'intégrer plusieurs fonctions ou servitudes dans une seule et même pièce, à savoir la bague, cette bague servant au transfert de fluide, tel que de l'huile, mais aussi au support d'au moins un équipement électrique et de ses moyens de raccordement électrique. Par ailleurs, cette bague est conçue pour faciliter son montage par emboîtement axial sur une autre pièce, par exemple en aveugle, comme cela sera décrit dans le détail dans ce qui suit. La fabrication de cette autre pièce peut en outre s'en trouver simplifiée.

Dans la présente demande, on entend par moyens d'emboîtement, des moyens configurés pour être engagés par emboîtement dans des moyens complémentaires d'une autre pièce ou pour recevoir par emboîtement des moyens complémentaires d'une autre pièce. Les moyens d'emboîtement sont donc du type mâle ou femelle.

On entend en outre par élément d'interface hydraulique ou électrique, un élément capable de transférer ou de distribuer un fluide tel que de l'huile d'au moins une première pièce à au moins une deuxième pièce, et d'assurer une connexion ou un raccordement électrique entre au moins une première pièce et au moins une deuxième pièce, les pièces raccordées électriquement n'étant pas forcément les pièces destinées à fournir et à recevoir du fluide. L'élément peut être intercalé entre deux desdites pièces. Dans la présente invention, la bague est un élément d'interface hydraulique et électrique qui assure un transfert de fluide et un raccordement électrique.

On entend par équipement électrique, un équipement qui fonctionne à l'énergie électrique, qui fournit de l'énergie électrique et/ou qui est configurée pour assurer une connexion électrique. Il peut s'agir d'un capteur électrique, tel qu'un capteur de position, ou à un simple conducteur électrique.

Dans la présente demande, on désigne par connecteur électrique indifféremment une embase ou une fiche, l'embase étant destinée à coopérer par emboîtement avec une fiche pour assurer une connexion électrique.

La bague comprend de préférence des moyens de fixation à l'autre pièce. La bague comprend par exemple des orifices axiaux de passage de vis destinées à être vissées dans des écrous de la pièce.

L'équipement porté par la bague est par exemple un capteur de position axiale, par exemple du type LVDT (de l'anglais *Linear Variable Differential Transformer*). La bague peut ainsi comprendre des moyens de support d'au moins un capteur de ce type. Ces moyens de support sont de préférence articulés à une extrémité du capteur par l'intermédiaire d'une liaison à rotule.

Au moins l'une des extrémités de chaque conduit est de préférence tubulaire et en saillie axiale sur la bague. Ces extrémités tubulaires forment des protubérances sur la bague, qui forment lesdits moyens d'emboîtement.

La présente invention concerne également un ensemble comportant une bague telle que décrite ci-dessus et une virole annulaire, caractérisé en ce que la virole comprend une portée cylindrique de centrage de la bague et une face annulaire d'appui axial de la bague, un connecteur électrique configuré pour coopérer par emboîtement axial avec le connecteur de la bague lorsque la bague est en appui axial sur la virole, et des canaux longitudinaux de circulation de fluide, qui ont chacun une extrémité longitudinale en regard d'une extrémité d'un conduit de la bague et destinée à être raccordée à cette extrémité, par exemple au moyen d'une raccord fluidique ou hydraulique. Ce raccord peut être associé à une liaison rotulante à chacune de ses extrémités axiales.

Avantageusement, la bague et la portée cylindrique de centrage de la virole sont conçues pour coopérer par un ajustement coulissant, c'est-à-dire avec un jeu, ce qui permet de faciliter le montage de la bague et d'en autoriser le démontage.

La virole peut comprendre des orifices ou trous dans lesquels sont logés des écrous ou inserts. Comme indiqué dans ce qui précède, la bague peut comporter des orifices axiaux de passage de vis destinées à être vissées dans ces écrous ou inserts.
Dans un cas particulier de réalisation de l'invention, une cavité de réception de fluide est ménagée entre la virole et la bague, cette cavité étant en liaison avec les extrémités longitudinales des canaux de la virole et les extrémités des conduits de la bague. La cavité de réception permet de distribuer le fluide depuis la virole vers la bague. Cette cavité de réception peut comprendre une gorge circulaire ménagée dans la virole et une gorge circulaire ménagée dans la bague. Chacune de ces gorges peut s'étendre sur une circonférence partielle de la bague ou de la virole.

Les canaux longitudinaux de la virole peuvent comprendre des canalisations rapportées sur la virole ou peuvent être formés dans des bossages de la virole.

La présente invention concerne encore un module de turbomachine, comportant un ensemble du type précité monté à une extrémité axiale d'un actionneur linéaire, cet actionneur comportant une partie interne fixe et une partie externe mobile en translation axiale sur la partie fixe, la partie mobile définissant autour de la partie fixe des chambres dont au moins une est alimentée en fluide par l'intermédiaire de tiges dont les extrémités axiales opposées à l'actionneur sont configurées pour être emboîtées dans les conduits de la bague. Les tiges sont de préférence axiales et télescopiques. Elles peuvent être associées à une liaison rotulante à chacune de leurs extrémités axiales.

La partie mobile de l'actionneur peut être fixée à une extrémité d'au moins un capteur de position axiale, par exemple du type LVDT, dont l'extrémité opposée est fixée à la bague d'interface. Ce capteur permet de connaître en temps réel la position axiale de la partie mobile de l'actionneur (et donc le calage des pales de l'hélice dans le cas où l'actionneur sert à l'orientation des pales de l'hélice). Dans le cas d'un capteur LVDT, le transformateur de ce capteur peut être situé du côté de la bague et fixé à celle-ci. Ce transformateur est relié à un câble électrique qui peut ainsi être relié au connecteur de la bague.

La présente invention concerne enfin un procédé de montage d'un module tel que décrit ci-dessus, caractérisé en ce qu'il comprend les étapes consistant à :
- assembler l'actionneur et monter la bague à une extrémité axiale de l'actionneur de sorte que les tiges aient leurs extrémités axiales opposées à l'actionneur emboîtées dans les conduits de la bague,
- déplacer l'actionneur et la bague en translation axiale vers la virole, jusqu'à ce que la bague prenne appui axialement sur la virole, les conduits de la bague soient en communication fluidique avec les canaux de la virole, et le connecteur de la bague soit emboîté dans le connecteur de la virole, et
- fixer la bague à la virole.

Le procédé peut en outre comprendre une ou plusieurs des étapes consistant à :
- serrer des brides de fixation de la virole et de l'actionneur, et
- pré-assembler un palier de transfert et des moyens de transmission d'un système d'orientation des pales d'une hélice, avant de monter l'ensemble sur l'actionneur.

Le montage de l'actionneur et de la bague sur la virole peut être réalisé en aveugle, c'est-à-dire sans voir cette virole. Le prémontage de la bague sur l'actionneur permet de rigidifier les servitudes (tiges télescopiques, capteurs LVDT, etc., par exemple) entre ces pièces lors du montage et de simplifier le montage. Comme expliqué dans ce qui précède, ce montage est relativement simple car il suffit d'emboîter des éléments de la bague dans des éléments complémentaires de la virole pour réaliser l'assemblage. Les moyens d'emboîtement de la bague et/ou de la virole peuvent former des moyens de détrompage permettant un positionnement angulaire correct des pièces l'une par rapport à l'autre. Un autre avantage est que la bague permet de se dispenser de réaliser des opérations d'usinage complexe sur la virole et de transférer ces opérations sur la bague, qui est de forme plus simple et de dimensions plus réduites.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue schématique en perspective de la bague d'interface hydraulique et électrique selon l'invention,
- la figure 2 est une vue schématique en perspective d'un capteur électrique du type LVDT pour la bague de la figure 1, ainsi que de ses moyens de support,
- les figures 3 et 4 sont des vues schématiques en perspective d'une virole annulaire d'un ensemble selon l'invention, vue de l'amont et de l'aval, respectivement,
- les figures 5 et 6 sont des vues schématiques en perspective et en coupe axiale de l'ensemble comprenant la bague des figures 1 et 2 et la virole des figures 3 et 4,
- la figure 7 est une vue très schématique d'un système d'orientation du pas des pales d'une hélice de turbomachine, comportant un actionneur linéaire et un ensemble selon les figures 5 et 6 monté en amont de cet actionneur,
- la figure 8 est une vue en perspective partielle de la virole et de la bague selon une variante de réalisation de l'invention,
- la figure 9 est une vue partielle en perspective et en coupe axiale de la bague et de la virole de la figure 8, et
- la figure 10 est une vue partielle en perspective de la virole de la figure 8.

### DESCRIPTION DETAILLEE

Dans la description qui suit, les termes « amont » et « aval » font référence au sens d'écoulement des gaz dans une turbomachine.

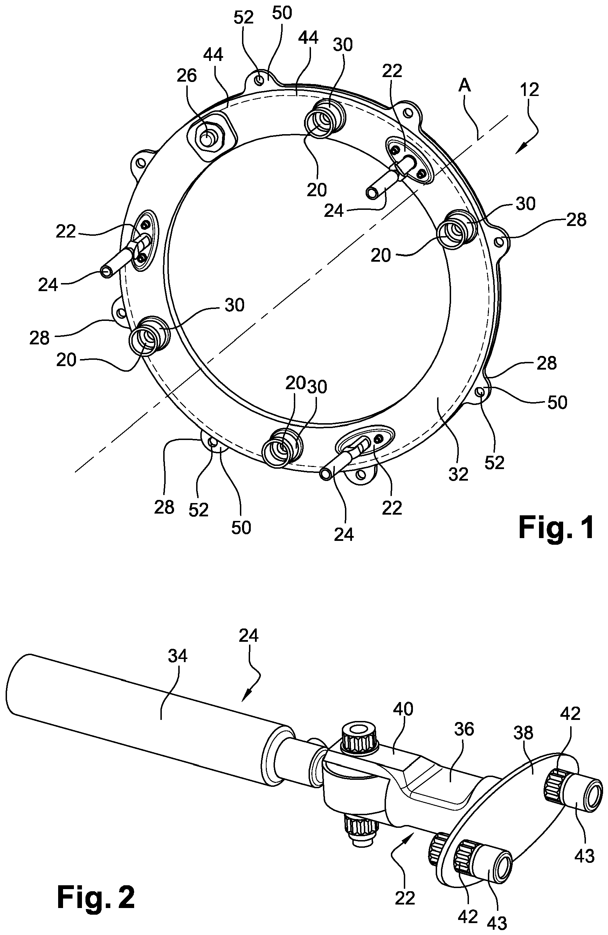

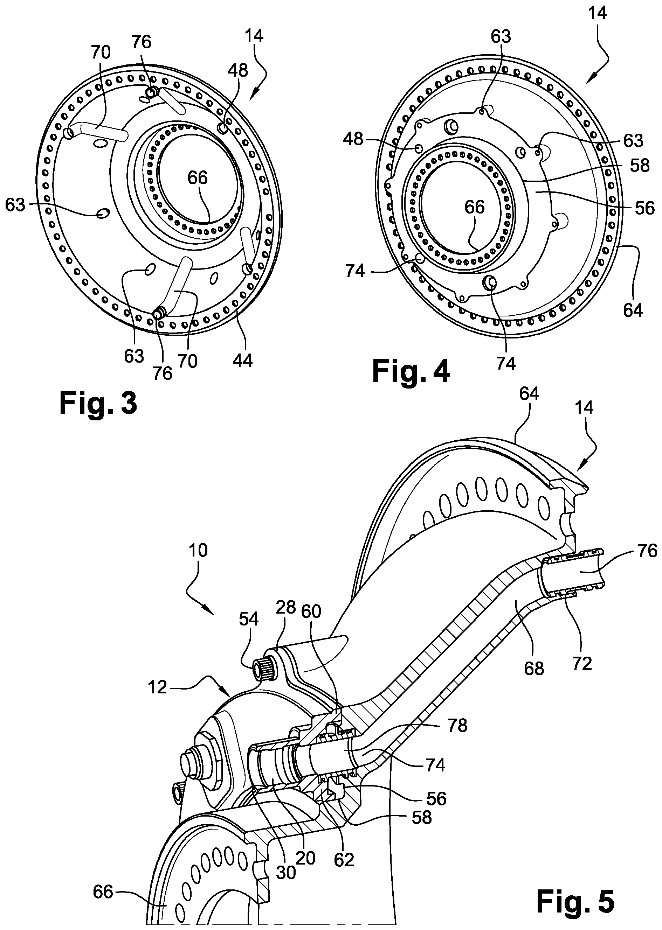

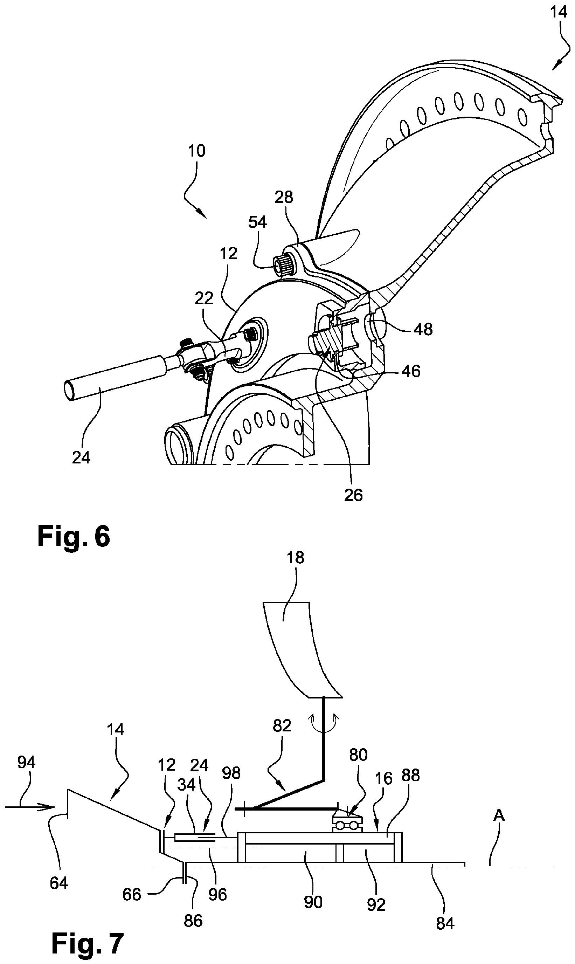

Les figures 1 à 6 représentent un mode de réalisation d'un ensemble 10 selon l'invention, cet ensemble 10 visible en figure 5 et 6 comportant essentiellement deux organes, une bague 12 d'interface hydraulique et électrique représentée en figure 1 et une virole annulaire 14 représentée aux figures 3 et 4. Comme cela sera décrit plus en détail dans ce qui suit en référence à la figure 7, cet ensemble 10 peut être utilisé pour l'alimentation en huile d'un actionneur linéaire 16 d'orientation du pas des pales 18 d'une hélice de turbomachine de type open rotor.

La bague 12 d'axe de révolution A comprend des conduits tubulaires 20 de transfert d'huile, des moyens 22 de support de capteurs LVDT 24, un connecteur 26 de raccordement électrique de ces capteurs 24, et des moyens 28 de fixation à la virole 14.

Les conduits 20 sont sensiblement parallèles entre eux et à l'axe A, et sont au nombre de quatre dans l'exemple représenté. Ces conduits 20 traversent axialement la bague 12 et leurs extrémités arrière ou aval sont définies par des embouts cylindriques 30 en saillie axiale sur une face radiale aval 32 de la bague. Chaque extrémité de chacun des conduits 20 est ici configurée pour recevoir par emboîtement un raccord fluidique, qui peut être une simple douille ou une tige tubulaire télescopique, comme cela sera décrit plus en détail dans ce qui suit.

La figure 2 représente à plus grande échelle les moyens 22 de support d'un capteur LVDT 24 et ce capteur LVDT.

De façon connue, un capteur LVDT 24 comprend un noyau ferromagnétique qui est monté axialement coulissant à l'intérieur d'un cylindre 34 comportant un transformateur. Le déplacement du noyau entraîne une modification de la distribution des champs magnétiques à l'intérieur du transformateur. La distribution des champs dépend donc de la position axiale du noyau dans le transformateur. Ce type de capteur peut donc être utilisé pour déterminer la position axiale d'une pièce solidaire du noyau du capteur, par rapport à une autre pièce solidaire du cylindre du capteur.

Les moyens de support 22 de la figure 2 comprennent une embase 36 dont une extrémité est reliée à une platine 38 de fixation à la bague 12, et dont l'autre extrémité comporte une chape 40 d'articulation sur une extrémité du cylindre 34 d'un capteur LVDT.

La platine 38 est appliquée sur un bossage amont (qui pourrait servir au montage d'un autre type d'équipement électrique) de la bague 12 et est fixée sur la bague par des vis qui traversent des orifices 42 de la platine et sont vissées dans des inserts 43 logés dans des trous borgnes du bossage de la bague. La chape 40 est de préférence articulée sur l'extrémité du cylindre 34 par une liaison à rotule.

En position de montage, les axes longitudinaux des cylindres 34 des capteurs 24 sont parallèles entre eux et à l'axe A. Les capteurs 24 sont situés du même côté (aval) que les embouts 30 des conduits 20.

Les capteurs 24, et en particulier les transformateurs des cylindres 34, sont reliés au connecteur électrique 26 par des câbles électriques, schématiquement représentés par des traits pointillés 44 en figure 1. Ces câbles 44 cheminent de préférence tous dans le même sens autour de la bague 12 jusqu'au connecteur 26, et fusionnent les uns avec les autres dès qu'ils peuvent l'être.

Le connecteur 26 comprend par exemple une fiche (mâle ou femelle) montée dans un orifice axial 46 de la bague et destinée à coopérer avec une embase complémentaire (femelle ou mâle) d'un connecteur monté dans un orifice axial 48 de la virole (figure 6, l'embase n'étant pas représentée pour plus de clarté).

Les moyens de fixation 28 de la bague 12 comprennent ici une rangée annulaire de pattes 50 qui s'étendent radialement vers l'extérieur depuis la périphérie externe de la bague. Ces pattes 50 comprennent des orifices axiaux 52 de passage de vis 54 destinées à être vissées dans des écrous portés par la virole 14. Ces orifices 54 peuvent servir à fixer des colliers de maintien des câbles électriques 44.

La virole 14 a une forme générale tronconique dont l'extrémité de plus petit diamètre est située à l'aval. La bague 12 est destinée à être montée sur cette extrémité aval qui comprend une face radiale aval 56 d'appui axial de la bague ainsi qu'une portée cylindrique 58 de centrage de la bague lors de son montage.

La bague 12 comprend à sa périphérie externe un rebord cylindrique 60 orienté vers l'amont et dont l'extrémité amont libre est destinée à venir en appui axial sur la face 56 de la virole 14. La bague 12 comprend en outre à sa périphérie interne un rebord cylindrique 62 orienté vers l'amont et dont la surface interne coopère par glissement avec la portée 58 de la virole 14, lors du montage de la bague (figures 4 et 5). Du fait de la présence de ces deux rebords cylindriques 60, 62, respectivement radialement externe et interne, la bague 12 a en section une forme sensiblement en U dont l'ouverture est orientée axialement vers l'amont, les rebords 60, 62 définissant entre eux une gorge annulaire fermée à l'amont par la virole 14.

La virole 14 comprend également une rangée annulaire d'orifices 63 dans lesquels sont sertis des écrous (non représentés dans les dessins) de vissage des vis 54 de fixation de la bague 12. En variante, la virole pourrait comprendre des bossages dans lesquels seraient formés des trous borgnes de logement d'inserts de vissage des vis 54, ces inserts étant par exemple similaires aux inserts 43 précités.

La virole comprend en outre, à chacune de ses extrémités axiales, une bride annulaire 64, 66 de fixation comportant des orifices de passage de moyens du type vis-écrou.

La virole 14 comprend également des canaux 68 longitudinaux de circulation d'huile, sensiblement depuis la bride amont 64 jusqu'à la face radiale 56. Ces canaux 68 sont au nombre de quatre dans l'exemple représenté et sont formés dans des bossages longitudinaux 70 qui font saillie sur la surface tronconique interne de la virole 14 (figures 3 et 5). Du fait de la forme tronconique de la virole 14, les canaux 68 ont leurs extrémités amont 72 (formant des entrées d'huile), qui sont situées sur une circonférence dont le diamètre est supérieur à celui de la circonférence sur laquelle sont situées les extrémités aval 74 des canaux (qui forment des sorties d'huile).

L'extrémité amont 72 de chaque canal 68 reçoit par emboîtement une extrémité axiale d'un raccord hydraulique tubulaire 76. L'extrémité aval 74 de chaque canal 68 reçoit par emboîtement une extrémité axiale d'un autre raccord hydraulique tubulaire 78, dont l'extrémité axiale opposée est emboîtée dans l'extrémité amont d'un conduit 20 de la bague 12. Les raccords 76, 78 sont ici sous forme de douilles. Chaque raccord 76, 78 peut comprendre un joint d'étanchéité à chacune de ses extrémités axiales et une collerette annulaire externe d'appui axial sur la virole 14. De préférence, les raccords 76, 78 ont chacun une section de passage qui est sensiblement identique à celle de l'embout 30 et du conduit 68 associés à ce raccord. L'utilisation d'un raccord 78 à la place d'un embout réalisé directement sur la bague 12 a pour avantage de faciliter la fabrication de la bague et de réduire les contraintes géométriques de l'ensemble.

Comme expliqué dans ce qui précède, l'ensemble 10 formé par la bague 12 et la virole 14 peut être utilisé pour l'alimentation en huile d'un actionneur linéaire 16 d'orientation du pas des pales 18 d'une hélice de turbomachine de type open rotor (figure 7).

Les pales 18 de l'hélices sont du type à calage variable, c'est-à-dire qu'elles peuvent être orientées autour de leurs axes radiaux grâce à un système d'orientation commandable du pas des pales, de façon à ce que celles-ci prennent une position angulaire optimale voulue selon les conditions de fonctionnement de la turbomachine et les phases de vol concernées (rotation des pales dans les deux sens avec angles d'hélice croissant et décroissant, et retour des pales en position drapeau en cas de dysfonctionnement).

Le système d'orientation des pales 18 de l'hélice comprend l'actionneur 16 à déplacement linéaire qui est centré sur l'axe A, un palier 80 de transfert de mouvement, et des moyens 82 de transmission pour assurer la rotation angulaire des pales.

L'actionneur 16 est annulaire et comporte une partie fixe cylindrique 84 dont l'extrémité amont comporte une bride annulaire 86 de fixation à la bride aval 66 de la virole 14. Autour de la partie fixe 84 se trouve une partie annulaire 88 mobile en coulissement axial sur la partie fixe 84.

La partie mobile 88 définit autour de la partie fixe 84 deux chambres annulaires 90, 92, respectivement amont et aval, qui sont remplies d'huile et qui sont reliées à des moyens d'alimentation en huile et d'évacuation d'huile. Par exemple, l'alimentation en huile de la chambre amont 90 entraîne une augmentation de son volume et un déplacement de la partie mobile 88 vers l'amont.

Le palier de transfert 80 est monté sur la partie mobile 88 de l'actionneur, le palier 80 étant ici un roulement à double rangée de billes dont la bague interne est fixée à la partie mobile 88 en étant solidaire de celle-ci en translation, et la bague externe est reliée par les moyens de transmission 82 aux pales 18.

Ces moyens de transmission 82 comportent par exemple des bielles 36. A mesure que la partie mobile 88 se déplace axialement (dans un sens ou dans l'autre), la bague interne du palier 80, solidaire de la partie mobile, entraîne la bague externe par le contact des billes, et tire sur les bielles, permettant de modifier l'angle de calage des pales 18.

L'ensemble 10 décrit dans ce qui précède peut être utilisé notamment pour le transfert d'huile depuis une source amont (flèche 94), jusqu'à au moins l'une des chambres 90, 92 de l'actionneur 16 et le palier 80 en vue de sa lubrification. Pour cela, des tiges tubulaires télescopiques 96 de raccordement fluidique (schématiquement représentées par des traits pointillés) s'étendent parallèlement à l'axe A et ont des extrémités aval en communication fluidique avec la chambre 90 par exemple ou des moyens de lubrification du palier 80, et des extrémités amont qui sont emboîtées dans les embouts tubulaires 30 précités des conduits 20 de la bague. Le nombre de tiges 96 est égal au nombre de conduits 20 de la bague 12 et est donc de quatre dans l'exemple représenté, deux pour l'alimentation en huile de la chambre 90 et deux pour la lubrification du palier 80 par exemple. De préférence, l'extrémité amont de chaque tige 96 est emboîtée dans un embout 30 par l'intermédiaire d'une liaison rotulante. Chaque conduit 20 peut comprendre un filetage interne de vissage d'un écrou de fixation d'une tige télescopique 96.

Ainsi, l'huile qui pénètre des les canaux 68 de la virole 14 s'écoule vers l'aval jusque dans les conduits 20 de la bague, puis dans les tiges télescopiques 96 pour être acheminée jusqu'à la chambre 90 et le palier 80.

La référence 98 désigne un noyau ferromagnétique de l'un des capteurs LVDT 24, ce noyau s'étendant parallèlement à l'axe A et étant fixé à la partie mobile 88, de préférence par une liaison rotulante. Le noyau 98 est monté coulissant dans l'un des cylindres 34 portés par la bague 12, comme décrit dans ce qui précède.

Les liaisons rotulantes de fixation des capteurs 24 et des tiges télescopiques 96 permettent de compenser les éventuels désalignements entre les pièces sur lesquelles ils sont fixés, en vue d'éviter leur flambage.

L'ensemble 10 et l'actionneur 16 forme un module de turbomachine, qui peut être assemblé de la façon suivante :
- lors d'une première étape, on assemble l'actionneur 16 et la bague 12 est montée à l'amont de l'actionneur de sorte que les extrémités des tiges télescopiques 96 aient leurs extrémités axiales opposées à l'actionneur emboîtées dans les embouts 30 des conduits 20 de la bague,
- l'actionneur et la bague sont ensuite positionnés angulairement autour de l'axe A de façon à ce que, notamment, le connecteur 26 de la bague soit aligné axialement avec celui de la virole 14 (la bague peut être équipée de moyens de détrompage destinés à coopérer avec des moyens complémentaires de la virole pour faciliter ce positionnement), l'actionneur et la bague sont alors déplacés en translation axiale vers la virole 14, jusqu'à ce que la bague prenne appui axialement sur la virole, les raccords 78 préalablement montés sur la virole s'emboîtent alors dans les conduits 20 de la bague, et le connecteur 26 de la bague s'emboîte dans celui de la virole,

- la bague et la virole sont ensuite fixées ensemble par serrage des vis 54 ; le serrage des vis 54 assure le verrouillage du module et la connexion électrique entre les connecteurs de la bague et de la virole,
- les brides 66 et 86 sont serrées l'une contre l'autre, et
- le palier 80 et les moyens de transmission 82 sont pré-assemblés et peuvent ensuite être montés sur l'actionneur 16.

Cet assemblage peut être réalisé verticalement, au montage, on oriente le moteur pour que l'axe A soit vertical.

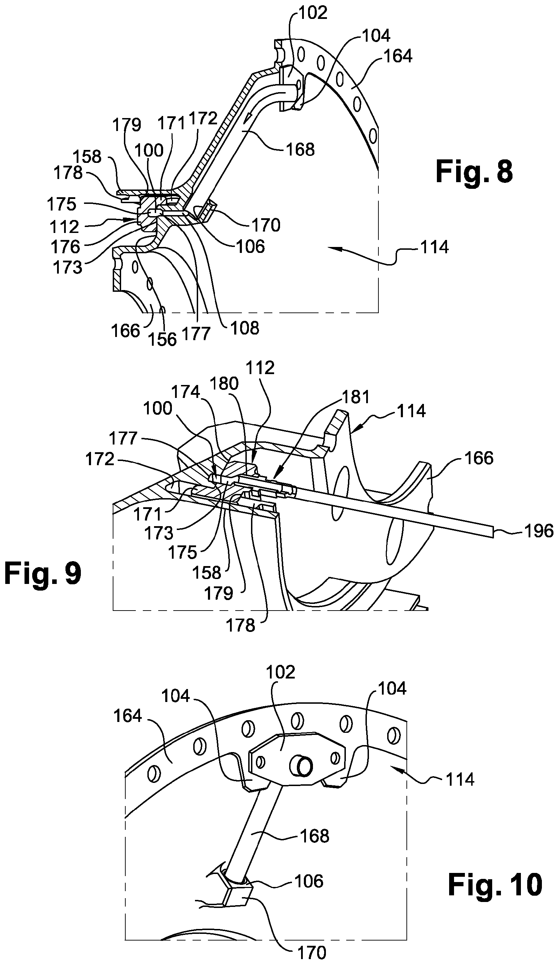

Les figures 8 à 10 représentent une variante de réalisation de l'invention dans laquelle la bague 112 est destinée à collecter le lubrifiant provenant de la virole 114 et à le transférer à des tiges télescopiques 196 pour l'alimentation de l'actionneur (non représenté).

Pour assurer un tel transfert, la bague 112 est rapportée axialement du côté aval ou arrière de la virole 114, tourné extérieurement vers l'actionneur, par rapport au flux traversant le moteur de la turbomachine, en ménageant, entre la bague 112 et la virole 114, une cavité de réception étanche 100 du lubrifiant reliant des alimentations d'arrivée et de sortie, comme on le verra plus tard.

Proche de la bride extérieure 164, du côté de la face avant ou amont de la virole 114, se trouve un support 102 agencé sur une patte de retenue 104 de la virole pour recevoir l'extrémité d'une canalisation 168 dont l'autre extrémité s'engage, avec étanchéité, dans le trou 106 d'un bossage 170 proche de la bride intérieure 166. Ainsi, la canalisation 168 suit radialement la paroi tronconique de la virole en s'étendant le long de sa face avant. Dans l'extrémité de la canalisation 168, liée au support 102, se raccorde, avec étanchéité, l'alimentation d'arrivée en lubrifiant. Dans le fond du bossage 170 est percé un trou axial traversant 108 dans l'épaisseur de la paroi de la virole, et donnant dans la cavité interne 100 de la bague, de sorte à amener l'huile dans la cavité. Le trou 108 est percé depuis le côté arrière de la virole pour déboucher dans le fond du trou 106 du bossage 170 dont la paroi empêche le perçage depuis le côté avant de la virole.

Dans l'exemple de réalisation montré, la bague 112 est montée concentriquement dans une partie de support annulaire 158 formant logement de réception pour la bague et issue axialement de la paroi de la virole. Pour assurer sa mise en place et son centrage, la bague présente aussi une saillie annulaire 171 qui s'engage dans un évidement complémentaire de réception 172 ménagé sur la virole. Et cela, jusqu'à ce que la face transversale avant 173 de la paroi 176 de la bague 112 coopère avec la face arrière 174 de la paroi de la virole, et, entre celles-ci, est prévue la cavité annulaire 100, qui s'étend sensiblement sur une demi-circonférence. La bague 112 est ainsi en butée axiale contre la virole 114.

La cavité 100 est ici obtenue par une gorge sensiblement demi-circulaire 175 ménagée dans la paroi 176 de la face avant 173 de la bague et par une gorge correspondante 177 ménagée dans la paroi de la face arrière de la virole. Les deux gorges réunies 175, 177 forment ainsi la cavité 100 et, dans le fond de la gorge de la virole, débouche le trou traversant 106 communiquant avec la canalisation 168 pour l'arrivée du lubrifiant, comme le montre la figure 8. L'étanchéité de la cavité 100 entre la bague 112 et la virole 114 peut être réalisée par le contact surfacique direct de leurs faces en regard 173, 174 notamment du fait que la pression d'huile de lubrification est relativement réduite, ou, en variante, par un ou des joints non représentés.

Le serrage axial de la bague 112 contre la virole 114 est obtenu par un écrou de serrage 178 qui est vissé dans un taraudage de la partie de support 158 de la virole servant au centrage, et qui s'applique contre la face extérieure arrière 179 de la bague, en pressant celle-ci contre la virole.

Par ailleurs, pour assurer une unique position d'assemblage possible lors du montage de la bague sur la virole, garantissant notamment la correspondance des gorges 175, 177, un moyen de détrompage est prévu solidarisant de plus en rotation la virole et la bague. Bien que non représenté, ce moyen peut comprendre un assemblage mâle-femelle spécifique (tel que des dents et des creux prévus dans la bague et la virole) permettant la liaison en rotation et la coopération de ces dernières dans une seule position).

Comme le montre la figure 9, dans le fond de la gorge demi-circulaire 175 de la bague sont prévus, dans cet exemple, deux trous traversants 180 sensiblement situés aux extrémités de celle-ci, c'est-à-dire diamétralement opposés.

Dans ces trous 180 sont engagés des raccords ou connecteurs hydrauliques 181 pour la liaison entre la cavité 100 et les tiges télescopiques 196, comme le montrent notamment la figure 9.

Les autres extrémités des tiges 196, opposées à celles reliées aux connecteurs 181, peuvent présenter chacune un profil permettant de recevoir un joint ou analogue pour faciliter le glissement avec la cavité à alimenter dans la partie mobile de l'actionneur, lors du déplacement. Le joint ne peut éviter des éventuels désalignements mais, en revanche, il les compense avantageusement en introduisant une fonction de rotule entre la tige d'injection du lubrifiant et le canal à alimenter tout en conservant l'étanchéité entre la tige et le canal en cas de petits désalignements entre ceux-ci.

Le fait de prévoir deux trous diamétralement opposés 180 dans la bague 112 (ou plus), auxquels sont raccordées les tiges 196, permet de répartir avantageusement le lubrifiant de façon homogène dans le palier. Le fait de réaliser une alimentation en plusieurs points sur la bague pour alimenter plusieurs tiges et, donc, plusieurs canaux, à partir d'une seule source commune d'alimentation est l'un des intérêts majeurs de l'invention.

Dans la face transversale avant 173 de la bague 112 peut être ménagée une gorge arquée, sensiblement sur la partie restante de la bague où la gorge demi-circulaire 175 pour le lubrifiant est absente. Cette gorge arquée suit sensiblement la gorge de lubrifiant 175, en étant approximativement dans son prolongement circulaire, et peut définir un arc inférieur à 180°. Bien entendu, cet arc pourrait prendre toute autre valeur selon les besoins. Au centre de la gorge peut être prévu un emplacement pour recevoir et fixer un connecteur électrique.

La face transversale arrière 179 de la bague 112 peut comprendre des emplacements (logements ou trous) de réception respectifs de capteurs, et des tiges télescopiques 196. Ces emplacements font face au mécanisme de commande de l'actionneur et sont agencés de telle façon que les tiges soient en regard de la cavité réceptrice de l'actionneur, conduisant au palier à lubrifier, et que la coaxialité soit assurée entre les parties des capteurs. Concernant la virole 114, elle peut présenter, en regard du connecteur fixé à la bague 112, une découpe ménagée dans sa paroi transversale, de manière à pouvoir raccorder au connecteur fixé sur la bague de distribution, un câble muni d'un connecteur approprié complémentaire.

Ainsi, l'invention permet non seulement de transférer, depuis l'intérieur de la virole 114 (à partir d'une seule alimentation) vers l'extérieur de celle-ci (par plusieurs sorties), et en toute fiabilité, du lubrifiant en direction du palier du système d'orientation des pales de l'hélice concernée, et du lubrifiant haute pression en direction de l'actionneur par des alimentations d'arrivée internes au carter de la turbomachine, mais, également, de servir de support d'instrumentation pour des capteurs permettant de les raccorder avantageusement par un connecteur unique à une alimentation électrique provenant de l'intérieur du carter.

## Revendications

1. Bague (12) d'interface hydraulique et électrique pour une turbomachine, **caractérisée en ce qu'**elle comporte des conduits (20) de transfert de fluide traversant axialement la bague et dont les extrémités axiales forment des moyens d'emboîtement axial, la bague comportant en outre des moyens (22) de support d'au moins un équipement électrique (24), et au moins un connecteur (26) de raccordement électrique de l'équipement, ce connecteur étant configuré pour coopérer par emboîtement axial avec un connecteur électrique complémentaire d'une autre pièce (14).

2. Bague (12) selon la revendication 1, **caractérisée en ce qu'**elle comprend des moyens (28, 50) de fixation à ladite autre pièce (14).

3. Bague (12) selon la revendication 1 ou 2, **caractérisée en ce qu'**elle comprend des moyens (22) de support d'au moins un capteur (24) de position axiale.

4. Bague (12) selon la revendication 3, **caractérisée en ce que** les moyens de support (22) sont articulés à une extrémité du capteur (24) par l'intermédiaire d'une liaison à rotule.

5. Bague (12) selon l'une des revendications précédentes, **caractérisée en ce qu'**au moins l'une des extrémités de chaque conduit (20) est tubulaire et en saillie axiale sur la bague.

6. Ensemble (10) comportant une bague (12) selon l'une des revendications précédentes et une virole annulaire (14), **caractérisé en ce que** la virole comprend une portée cylindrique (58) de centrage de la bague et une face annulaire (56) d'appui axial de la bague, un connecteur électrique configuré pour coopérer par emboîtement axial avec le connecteur (26) de la bague lorsque la bague est en appui axial sur la virole, et des canaux longitudinaux (68) de circulation de fluide, qui ont chacun une extrémité longitudinale (74) en regard d'une extrémité d'un conduit (20) de la bague et destinée à être raccordée à cette extrémité, par exemple au moyen d'un raccord fluidique (78).

7. Ensemble (10) selon la revendication 6, **caractérisé en ce que** la virole (14) comprend des orifices (63) ou des trous dans lesquels sont logés des écrous ou inserts, la bague (12) comportant des orifices axiaux (52) de passage de vis (54) destinées à être vissées dans ces écrous ou inserts.

8. Ensemble (10) selon la revendication 6 ou 7, **caractérisé en ce qu'**une cavité de réception de fluide est ménagée entre la virole (14) et la bague (12), cette cavité étant en liaison avec les extrémités longitudinales (74) des canaux (68) de la virole et les extrémités des conduits (20) de la bague.

9. Ensemble (10) selon la revendication 8, **caractérisé en ce que** la cavité de réception comprend une gorge circulaire ménagée dans la virole (14) et une gorge circulaire ménagée dans la bague (12).

10. Ensemble (10) selon l'une des revendications 6 à 9, **caractérisé en ce que** les canaux longitudinaux (68) comprennent des canalisations rapportées sur la virole (14) ou sont formés dans des bossages (70) de la virole.

11. Module de turbomachine, comportant un ensemble (10) selon l'une des revendications 6 à 10 monté à une extrémité axiale d'un actionneur linéaire (16), cet actionneur comportant une partie interne (84) fixe et une partie externe (88) mobile en translation axiale sur la partie fixe, la partie mobile définissant autour de la partie fixe des chambres (90, 92) dont au moins une est alimentée en fluide par l'intermédiaire de tiges (96) dont les extrémités axiales opposées à l'actionneur sont configurées pour être emboîtées dans les conduits (20) de la bague (12).

12. Module selon la revendication 11, **caractérisé en ce que** la partie mobile (88) de l'actionneur (16) est fixée à une extrémité d'au moins un capteur (24) de position axiale, dont l'extrémité opposée est fixée à la bague (12).

13. Procédé de montage d'un module selon la revendication 11 ou 12, **caractérisé en ce qu'**il comprend les étapes consistant à :
- assembler l'actionneur (16) et monter la bague (12) à une extrémité axiale de l'actionneur de sorte que les tiges (96) aient leurs extrémités axiales opposées à l'actionneur emboîtées dans les conduits (20) de la bague,
- déplacer l'actionneur et la bague en translation axiale vers la virole (14), jusqu'à ce que la bague prenne appui axialement sur la virole, les conduits de la bague soient en communication fluidique avec les canaux (68) de la virole, et le connecteur (26) de la bague soit emboîté dans le connecteur de la virole, et
- fixer la bague à la virole.

## Patentansprüche

1. Hydraulischer und elektrischer Schnittstellenring (12) für eine Turbomaschine, **dadurch gekennzeichnet, dass** er Rohrleitungen (20) zur Übertragung von Fluid umfasst, die den Ring axial durchqueren und deren axiale Enden Mittel zur axialen Einpassung bilden, wobei der Ring weiter Stützmittel (22) mindestens einer elektrischen Ausrüstung (24) und mindestens einen Stecker (26) zum elektrischen Anschluss der Ausrüstung beinhaltet, wobei dieser Stecker konfiguriert ist, um durch axiale Einpassung mit einem zum einem anderen Teil (14) komplementären elektrischen Stecker zusammenzuwirken.

2. Ring (12) nach Anspruch 1, **dadurch gekennzeichnet, dass** er Befestigungsmittel (28, 50) an das andere Teil (14) umfasst.

3. Ring (12) nach Anspruch 1 oder 2, **dadurch gekennzeichnet, dass** er Stützmittel (22) mindestens eines Sensors (24) in axialer Position umfasst.

4. Ring (12) nach Anspruch 3, **dadurch gekennzeichnet, dass** die Stützmittel (22) an einem Ende des Sensors (24) mittels einer Drehgelenkverbindung artikuliert sind.

5. Ring (12) nach einem der vorstehenden Ansprüche, **dadurch gekennzeichnet, dass** mindestens eines der Enden jeder Rohrleitung (20) rohrförmig ist und auf dem Ring axial hervorragt.

6. Anordnung (10), einen Ring (12) nach einem der vorstehenden Ansprüche und einen ringförmigen Mantel (14) beinhaltend, **dadurch gekennzeichnet, dass** der Mantel eine zylindrische Auflagefläche (58) zum Zentrieren des Rings und eine ringförmige Fläche (56) zur axialen Anlage des Rings, einen elektrischen Stecker, der konfiguriert ist, um durch axiale Einpassung mit dem Stecker (26) des Rings zusammenzuwirken, wenn der Ring axial an dem Mantel anliegt, und Längskanäle (68) zum Zirkulieren von Fluid umfasst, die jeweils ein Längsende (74) aufweisen, das einem Ende einer Rohrleitung (20) des Rings zugewandt ist und dazu vorgesehen ist, an diesem Ende, beispielsweise mithilfe eines fluidischen Anschlusses (78) angeschlossen zu werden.

7. Anordnung (10) nach Anspruch 6, **dadurch gekennzeichnet, dass** der Mantel (14) Öffnungen (63) oder Löcher umfasst, in denen Schraubenmuttern oder Einsätze untergebracht sind, wobei der Ring (12) axiale Öffnungen (52) zur Schraubendurchführung (54) beinhaltet, die dazu vorgesehen sind, in diese Schraubenmuttern oder Einsätze geschraubt zu werden.

8. Anordnung (10) nach Anspruch 6 oder 7, **dadurch gekennzeichnet, dass** ein Hohlraum zur Aufnahme von Fluid zwischen dem Mantel (14) und dem Ring (12) eingerichtet ist, wobei dieser Hohlraum mit den Längsenden (74) der Kanäle (68) des Mantels und den Enden der Rohrleitungen (20) des Rings in Verbindung steht.

9. Anordnung (10) nach Anspruch 8, **dadurch gekennzeichnet, dass** der Hohlraum zur Aufnahme eine runde Nut, die im Mantel (14) eingerichtet ist, und eine runde Nut, die im Ring (12) eingerichtet ist, umfasst.

10. Anordnung (10) nach einem der Ansprüche 6 bis 9, **dadurch gekennzeichnet**, das die Längskanäle (68) Kanalisierungen umfassen, die auf dem Mantel (14) aufgesteckt sind, oder in Buckeln (70) des Mantels gebildet sind.

11. Turbomaschinenmodul, eine Anordnung (10) nach einem der Ansprüche 6 bis 10 beinhaltend, die an einem axialen Ende eines linearen Aktuators (16) montiert ist, wobei dieser Aktuator einen festen inneren Teil (84) und einen beweglichen äußeren Teil (88) axialverschiebbar auf dem festen Teil beinhaltet, wobei der bewegliche Teil um den festen Teil Kammern (90, 92) definiert, von denen mindestens eine mittels Stangen (96) mit Fluid versorgt wird, deren axiale dem Aktuator entgegengesetzte Enden konfiguriert sind, um in die Rohrleitungen (20) des Rings (12) eingepasst zu werden.

12. Modul nach Anspruch 11, **dadurch gekennzeichnet, dass** der bewegliche Teil (88) des Aktuators (16) an einem Ende mindestens eines Sensors (24) in axialer Position befestigt ist, dessen entgegengesetztes Ende am Ring (12) befestigt ist.

13. Verfahren zur Montage eines Moduls nach Anspruch 11 oder 12, **dadurch gekennzeichnet, dass** es die Schritte umfasst, bestehend aus:
- Zusammenbauen des Aktuators (16) und Montieren des Rings (12) an einem axialen Ende des Aktuators, sodass die axialen dem Aktuator entgegengesetzten Enden der Stangen (96) in den Leitungen (20) des Rings eingepasst sind,
- axiales Verschieben des Aktuators und des Rings zum Mantel (14) hin, bis der Ring axial am Mantel anliegt, die Rohrleitungen des Rings mit den Kanälen (68) des Mantels in Fluidverbindung kommen und der Stecker (26) des Rings im Stecker des Mantels eingepasst ist, und
- Befestigen des Rings am Mantel.

## Claims

1. Hydraulic and electrical interface ring (12) for a turbine engine, **characterised in that** it comprises ducts (20) for transferring fluid passing axially through the ring and the axial ends of which form axial interlocking means, the ring further comprising means (22) for supporting at least one electrical equipment (24), and at least one connector (26) for electrically connecting the equipment, said connector being configured to interact by axial interlocking with a complementary electrical connector of another part (14).

2. Ring (12) according to claim 1, **characterised in that** it comprises means (28, 50) for fastening to said other part (14).

3. Ring (12) according to either claim 1 or claim 2, **characterised in that** it comprises means (22) for supporting at least one axial position sensor (24).

4. Ring (12) according to claim 3, **characterised in that** the support means (22) are articulated to one end of the sensor (24) by means of a ball-joint connection.

5. Ring (12) according to any of the preceding claims, **characterised in that** at least one of the ends of each duct (20) is tubular and projects axially on the ring.

6. Assembly (10) comprising a ring (12) according to any of the preceding claims and an annular collar (14), **characterised in that** the collar comprises a cylindrical bearing surface (58) for centring the ring and an annular face (56) for axially supporting the ring, an electrical connector which is configured to interact by axial interlocking with the connector (26) of the ring when the ring is axially supported on the collar, and longitudinal channels (68) for circulating fluid, which each have a longitudinal end (74) which is opposite an end of a duct (20) of the ring and is intended to be connected to said end, for example by means of a fluid connection (78).

7. Assembly (10) according to claim 6, **characterised in that** the collar (14) comprises holes (63) in which nuts or inserts are accommodated, the ring (12) comprising axial holes (52) for the passage of screws (54) which are intended to be screwed into said nuts or inserts.

8. Assembly (10) according to either claim 6 or claim 7, **characterised in that** a cavity for receiving fluid is made between the collar (14) and the ring (12), said cavity being connected to the longitudinal ends (74) of the channels (68) in the collar and to the ends of the ducts (20) of the ring.

9. Assembly (10) according to claim 8, **characterised in that** the receiving cavity comprises a circular groove which is made in the collar (14) and a circular groove which is made in the ring (12).

10. Assembly (10) according to any of claims 6 to 9, **characterised in that** the longitudinal channels (68) comprise pipes which are attached to the collar (14) or are formed in bosses (70) on the collar.

11. Turbine engine module, comprising an assembly (10) according to any of claims 6 to 10 which is mounted on an axial end of a linear actuator (16), said actuator comprising a fixed inner part (84) and an outer part (88) which can move in translation on the fixed part, the movable part defining chambers (90, 92) around the fixed part, at least one of said chambers being supplied with fluid by means of rods (96) of which the axial ends opposite the actuator are configured to be interlocked in the ducts (20) of the ring (12).

12. Module according to claim 11, **characterised in that** the movable part (88) of the actuator (16) is fastened to an end of at least one axial position sensor (24), the opposite end of which is fastened to the ring (12).

13. Method for mounting a module according to either claim 11 or claim 12, **characterised in that** said method comprises steps consisting in:
- assembling the actuator (16) and mounting the ring (12) at an axial end of the actuator in such a way that the axial ends of the rods (96) which are opposite the actuator are interlocked in the ducts (20) of the ring,
- moving the actuator and the ring in axial translation towards the collar (14), until the ring is axially supported on the collar, the ducts of the ring are in fluid communication with the channels (68) in the collar, and the connector (26) of the ring is interlocked in the connector of the collar, and
- fastening the ring to the collar.
